# EUROPÄISCHE PATENTANMELDUNG

(11) **EP 1 826 098 A2**
(43) Veröffentlichungstag der Anmeldung: **29.08.2007**
(21) Anmeldenummer: 07101415.3
(22) Anmeldetag: 30.01.2007
(51) Int. Cl.: B62D 7/14

(54) **Mehrachslenkungsanlage**

(30) Priorität: 23.02.2006 DE 102006008436
(71) Anmelder: ZF Lenksysteme GmbH, 73527 Schwäbisch Gmünd (DE)
(72) Erfinder: Kogel, Walter, 73453 Abtsgmünd (DE); Braun, Andreas, 73116 Wäschenbeuren (DE)

(57) **Zusammenfassung**

Die Erfindung betrifft eine Mehrachslenkungsanlage (1) für Fahrzeuge. Erfindungsgemäß ist ein Überlagerungsmodul (21, 34) vorgesehen, mittels dem der der zweiten Lenkungsanordnung (3) von der ersten Lenkungsanordnung (2) über eine Lenkkraft-Übertragungseinrichtung (15, 30) aufgezwungenen Lenkbewegung eine Offset-Lenkbewegung überlagerbar ist.

## Beschreibung

Die Erfindung betrifft eine Mehrachslenkungsanlage gemäß dem Oberbegriff des Anspruchs 1 sowie ein Verfahren zur Steuerung einer Mehrachslenkungsanlage gemäß dem Oberbegriff des Anspruchs 16.

Bei bekannten mehrachsgelenkten Fahrzeugen mit mindestens zwei, jeweils einer Lenkachse zugeordneten Lenkungsanordnungen sind die Lenkungsanordnungen über eine mechanische und/oder hydraulische Kopplung miteinander verbunden, wodurch die Radeinschlagwinkel der Fahrzeugräder synchronisiert werden. Aus der DE 37 07 700 A1 ist es bekannt, die Lenkgestänge beider Lenkungsanordnungen über Schubstangen miteinander zu koppeln. Die DE 195 10 208 A1 beschreibt dagegen eine Mehrachslenkungsanlage, bei der die erste Lenkungsanordnung ein hydraulisches Hauptlenkungsaggregat und die zweite Lenkungsanordnung ein hydraulisches Hilfslenkungsaggregat umfasst, wobei das Hilfslenkungsaggregat als Nehmerzylinder ausgebildet ist, der mit einem Geberzylinder der ersten Lenkungsanlage über eine hydrostatische Lenkkraftübertragungseinrichtung gekoppelt ist. Hauptlenkungsaggregat und Hilfslenkungsaggregat dienen zur Servounterstützung der vom Fahrer über die Lenkhandhabe initiierten Lenkbewegung. Eine Lenkbewegung am Lenkrad erzeugt eine Lenkbewegung der ersten Lenkungsanordnung, welche über die hydraulische Kopplung eine Lenkbewegung der zweiten Lenkungsanordnung erzwingt. Bei den bekannten Mehrachslenkungsanlagen müssen die Längen der Radlenkhebel und der Lenkschubstangen so gewählt werden, dass die Radeinschlagwinkel der Ackermanngeometrie folgen, die gedachten Verlängerungen der Fahrzeugachsen sich also in einem gemeinsamen Momentanpol schneiden. Dies ist zweckmäßig, um den Reifenverschleiß so gering wie möglich zu halten und ein gutes Einlenkverhalten zu erzielen. In der Praxis werden jedoch Fahrzeuge derselben Grundbauart mit unterschiedlichen Radständen gebaut. Um der Ackermanngeometrie zu folgen, müssten für Fahrzeuge mit unterschiedlichen Radständen auch unterschiedlich bemessene Lenkschubstangen und Radlenkhebel vorgesehen werden. Hierauf wird jedoch häufig aus Kostengründen verzichtet und ein Fehler in der Ackermanngeometrie mit negativen Auswirkungen auf den Reifenverschleiß und das Einlenkverhalten in Kauf genommen.

Ein weiterer Nachteil der bekannten Mehrachslenkungsanlagen besteht darin, dass aufgrund der mechanischen und/oder hydraulischen Kopplung der zweiten Lenkungsanordnung und der ersten Lenkungsanordnung und der daraus resultierenden erzwungenen Lenkbewegung der zweiten Lenkungsanordnung kein individueller Einfluss auf das Lenkverhalten der zweiten Lenkungsanordnung genommen werden kann.

Der Erfindung liegt die daher Aufgabe zugrunde, eine verbesserte Mehrfachlenkungsanlage und ein Verfahren zur Steuerung einer Mehrfachlenkungsanlage anzugeben, mit denen eine individuelle Anpassung der Lenkungsanordnungen an die Ackermanngeometrie möglich ist, ohne bauliche Änderungen an der Mehrachslenkungsanlage vornehmen zu müssen.

Diese Aufgabe wird vorrichtungsgemäß mit den Merkmalen des Anspruchs 1 und verfahrensgemäß mit den Merkmalen des Anspruchs 16 gelöst. Vorteilhafte Weiterbildungen der Erfindung sind in den Unteransprüchen angegeben.

Der Erfindung liegt der Gedanke zugrunde, die zweite Lenkungsanordnung mit einem Überlagerungsmodul auszustatten, mittels dem der von der ersten Lenkungsanordnung erzwungenen Lenkungsbewegung bzw. dem daraus resultierenden Radeinschlagwinkel eine Offset-Lenkbewegung, das heißt eine Überlagerungslenkbewegung oder anders ausgedrückt einen Offset-Radeinschlagwinkel, das heißt einen Überlagerungsradeinschlagwinkel, zu überlagern.

Erfindungsgemäß ist vorgesehen, dass das Überlagerungsmodul auf die Lenkbewegung der zweiten Lenkungsanordnung in Abhängigkeit von statischen Größen, insbesondere in Abhängigkeit des Radstandes, Einfluss nimmt. Durch die Überlagerung einer Offset-Lenkbewegung kann die zweite Lenkungsanordnung derart angesteuert werden, dass das Fahrzeug bei der Lenkung der Ackermanngeometrie folgt. Hieraus resultiert ein geringerer Reifenverschleiß und ein verbessertes Einlenkverhalten des Fahrzeugs. Die erfindungsgemäße Lenkungsanordnung kann aufgrund des Vorsehens des Überlagerungsmoduls bei Fahrzeugen mit beliebigen Radständen, sowohl zwischen den Lenkachsen, als auch zwischen den Lenkachsen und den starren Achsen, eingesetzt werden, ohne bauliche Anpassungen an den Lenkungsanordnungen vornehmen zu müssen. Dabei liegt es im Rahmen der Erfindung, einen einmal für eine spezielle Fahrzeugkonfiguration festegelegten Offset-Radeinschlagwinkel dauerhaft zu überlagern.

Zusätzlich oder alternativ kann der der zweiten Lenkungsanordnung von der ersten Lenkungsanordnung aufgezwungenen Lenkbewegung eine Offset-Lenkbewegung in Abhängigkeit dynamischer Größen, wie beispielsweise der Fahrzeuggeschwindigkeit und/oder der Lenkgeschwindigkeit überlagert werden. Beispielsweise kann die Ackermanngeometrie beim Einlenkvorgang bewusst für eine kurze Zeitspanne verlassen werden, insbesondere indem die vorgegebene Lenkungsbewegung übersteuert bzw. verstärkt wird. Hieraus resultiert dann ein kurzzeitiges stärkeres Einlenken der zweiten Lenkungsanordnung bzw. der zugehörigen Fahrzeugräder, wodurch die für ein sicheres Einlenken notwendigen Seitenführungskräfte schneller aufgebaut werden können.

Bevorzugt umfasst das Überlagerungsmodul einen Aktuator, insbesondere einen Elektromotor, der von einem Steuerungs-gerät, insbesondere einem Software-Steuerungsgerät, ansteuerbar ist. Das Steuerungsgerät ist beispielsweise derart ausgebildet, dass der Radstand parametriert ist, also der zu überlagernde Offset-Radeinschlagwinkel auf Basis des abgefragten Radstandes ermittelt wird. Es ist auch denkbar, den oder die zu überlagernden Offset-Radeinschlagwinkel unmittelbar in dem Steuergerät einzuprogrammieren. Mittels des Steuergeräts kann das Überlagerungsmodul in Abhängigkeit statischer und/oder dynamischer Parameter, wie Radstand und/oder Lenkwinkel und/oder Lenkgeschwindigkeit und/oder Fahrzeuggeschwindigkeit angesteuert werden, um ein optimales Lenkergebnis zu erzielen.

Eine Möglichkeit, eine Offset-Lenkbewegung zu überlagern besteht darin, das Überlagerungsmodul als Differenzialwinkeleinheit, also als ein Winkelüberlagerungsgetriebe, auszubilden. Hierzu ist es notwendig, die erste Lenkungsanordnung und die zweite Lenkungsanordnung rotatorisch zwangszukoppeln, also der zweiten Lenkungsanordnung einen Lenkwinkel vorzugeben, der abhängig ist von der Lenkbewegung der ersten Lenkungsanordnung. Diesem vorgegebenen Lenkwinkel wird mithilfe des Winkelüberlagerungsgetriebes ein Offset-Lenkwinkel überlagert, wodurch in Abhängigkeit statischer und/oder dynamischer Größen auf die resultierende Lenkbewegung der zweiten Lenkungsanordnung bzw. den resultierenden Radeinschlag der zweiten Lenkungsanordnung Einfluss genommen werden kann.

In Weiterbildung der Erfindung ist vorgesehen, dass das Winkelüberlagerungsgetriebe eine Eingangswelle und eine Ausgangswelle umfasst. Dabei wird die Eingangswelle von der Kopplungswelle oder einer drehfest mit der Kopplungswelle verbundenen Welle gebildet. Die Ausgangswelle des Winkelübertragungsgetriebes bildet die Eingangswelle des Hilfslenkungsaggregates, also der Servounterstützung der zweiten Lenkungsanordnung. Dabei kann das Winkelüberlagerungsgetriebe in bekannter Weise nach dem Prinzip eines Planetengetriebes aufgebaut sein. Dieses besteht im Wesentlichen aus den Hauptbestandteilen Schneckenrad, zwei in axialer Richtung beabstandeten Planetenträgern sowie mehreren, vorzugsweise drei, Stufenplaneten. Die Stufenplaneten stellen die mechanische Verbindung zwischen einem ersten und einem zweiten Sonnenrad dar, wobei ein Sonnenrad mit der Eingangswelle und das gegenüberliegende Sonnenrad mit der Ausgangswelle des Überlagerungsgetriebes verbunden ist. Hierdurch wird der direkte Durchtrieb von der Eingangswelle zur Ausgangswelle und in umgekehrter Richtung gewährleistet. Bei einer von einem Elektromotor erzeugten Bewegung des Schneckenrades umkreisen die Stufenplaneten die beiden Sonnenräder. Aufgrund einer Zähnezahldifferenz der Stufenplaneten entsteht eine relative Drehbewegung der Sonnenräder zueinander. Die vorgegebene Lenkbewegung der Eingangswelle und die elektromotorisch beeinflusste Schneckenbewegung werden am unteren Sonnenrad, also an der Ausgangswelle, zusammengeführt und auf das Hilfslenkungsaggregat, insbesondere ein Kugelmutterhydrogetriebe, übertragen. Auf diese Weise kann mittels des Winkelüberlagerungsgetriebes ein Offset-Lenkwinkel zu dem vorgegebenen Lenkwinkel addiert oder subtrahiert werden. Der Elektromotor des Winkelüberlagerungsgetriebes wird von dem Software-Steuerungsgerät in Abhängigkeit statischer und/oder dynamischer Größen angesteuert.

Bei der Verwendung eines Winkelüberlagerungsgetriebes als Überlagerungsmodul ist es von Vorteil, wenn das Hilfslenkungsaggregat und/oder das Hauptlenkungsaggregat als Kugelmutterhydrogetriebe ausgebildet sind. Diese beinhalten in der Regel einen in einem Gehäuse geführten Hydraulikkolben, über den die Drehbewegung der Eingangswelle hydraulisch unterstützt und auf eine, in der Regel als Segmentwelle ausgebildete Ausgangswelle übertragen wird, welche verschwenkend auf einen Lenkstockhebel des Lenkgestänges einwirkt. Wird lediglich eine geringere Servounterstützung benötigt, ist es auch denkbar, anstelle des Kugelmutterhydrogetriebes ein hydraulisch und/oder elektromotorisch unterstütztes Zahnstangengetriebe einzusetzen.

Eine weitere Möglichkeit zur Überlagerung einer Offset-Lenkbewegung besteht darin, das Überlagerungsmodul als Längenänderungseinheit auszubilden, mit der die wirksame Länge einer Stange, insbesondere einer Schubstange, also einer im Wesentlichen in Fahrzeuglängsrichtung verlaufenden Stange des Lenkgestänges der zweiten Lenkungsanordnung veränderbar ist. Dabei ist es möglich, die wirksame Länge der Stange einmalig bei der Fahrzeugkonfiguration über die Längenänderungseinheit zu verändern oder über die Änderung der wirksamen Länge der Stange dynamisch auf den Lenkungsprozess Einfluss zu nehmen. Mittels der Längenänderungseinheit ist im Gegensatz zum Winkelüberlagerungsgetriebe ein Offset-Weg, also eine translatorische Bewegung, überlagerbar, d.h. addierbar oder subtrahierbar. Bevorzugt sind hierzu die erste Lenkungsanordnung und die zweite Lenkungsanordnung mechanisch mittels mindestens einer Schubstange miteinander gekoppelt, so dass die Schubstange eine Lenkbewegung der zweiten Lenkungsanordnung erzwingt.

In Ausgestaltung der Erfindung ist mit Vorteil vorgesehen, dass die Längenänderungseinheit in eine Schubstange des Lenkgestänges der zweiten Lenkungsanordnung integriert ist. Durch Änderung der wirksamen Länge der Schubstange kann unmittelbar Einfluss auf den resultieren Radeinschlagwinkel genommen werden.

Bevorzugt ist die längenveränderliche Schubstange des zweiten Lenkgestänges einerseits gelenkig mit einem Zwischenhebel und andererseits gelenkig mit einem ersten Radlenkhebel des zweiten Lenkgestänges verbunden. Der Zwischenhebel ist einerseits an der Fahrzeugkarosserie angelenkt und andererseits gelenkig mit der die beiden Lenkungsanordnungen verbindenden Schubstange gelenkig verbunden. Die Längenänderungseinheit kann beispielsweise als Spindeltrieb ausgebildet werden, welcher bevorzugt elektromotorisch angetrieben ist. Ebenso ist eine Ausbildung als hydraulische Kolben-Zylindereinheit denkbar. Das Steuerungsgerät wirkt steuernd und/oder regelnd auf den Antrieb der Längenänderungseinheit in Abhängigkeit statischer und/oder dynamischer Größen ein.

Wenn das Überlagerungsmodul als Längenänderungseinheit ausgebildet ist, ist es von Vorteil, das Hilfslenkungsaggregat als einfache Kolben-Zylindereinheit auszubilden. Diese wird bevorzugt mit Hydraulikflüssigkeit einer Hydraulikpumpe des Hauptlenkungsaggregats versorgt. Der zweiten Lenkungsanordnung ist in Weiterbildung der Erfindung eine Ventileinheit zugeordnet, mit die Hydraulikflüssigkeitsversorgung der Kolben-Zylindereinheit und damit das Maß der Servounterstützung regelbar ist.

Die erfindungsgemäße Mehrachslenkungsanlage eignet sich insbesondere zur Lenkung der beiden vorderen Achsen eines Fahrzeuges, insbesondere eines Nutzfahrzeugs, kann jedoch auch zur Lenkung von Fahrzeugen eingesetzt werden, bei denen die Lenkachsen nicht unmittelbar benachbart, sondern durch starre Achsen getrennt sind.

Gemäß dem erfindungsgemäßen Verfahren zur Steuerung einer Mehrachslenkungsanlage eines Fahrzeugs ist vorgesehen, dass der von der ersten Lenkungsanordnung vorgegebenen Lenkbewegung eine Offset-Lenkbewegung in Abhängigkeit statischer und/oder dynamischer Größen in Abhängigkeit statischer Größen, insbesondere dem Radstand und/oder dem Gesamtübersetzungsverlauf der Lenkung und/oder dem Lenkwinkel überlagert wird. Aufgrund der erfindungsgemäßen Vorrichtung und des erfindungsgemäßen Verfahrens ist es möglich, dynamisch auf die Lenkbewegung der zweiten Lenkachse oder weiterer Lenkachsen Einfluss zu nehmen. Ebenso ist es auf einfache Weise realisierbar, dass sämtliche Achsen des Fahrzeugs der Ackermanngeometrie folgen, unabhängig von der Fahrzeugkonfiguration, insbesondere unabhängig von den gewählten Radständen, ohne das Gleichteilkonzept bezüglich der mechanischen Komponenten aufgeben zu müssen.

Weitere Einzelheiten und Vorteile der Erfindung ergeben sich aus der nachfolgenden Figurenbeschreibung und den beigefügten Zeichnungen, in denen mehrere Ausführungsformen beispielhaft veranschaulicht sind. In den Zeichnungen zeigen:

Fig. 1 eine schematische Darstellung einer Mehrachslenkungsanlage mit zwei Lenkungsanordnungen, die rotatorisch gekoppelt sind, und

Fig. 2 eine schematische Darstellung einer alternativen Mehrachslenkungsanlage mit zwei Lenkungsanordnungen, wobei die beiden Lenkungsanordnungen translatorisch gekoppelt sind.

In den Figuren sind gleiche Bauteile und Bauteile mit gleicher Funktion mit den gleichen Bezugszeichen gekennzeichnet.

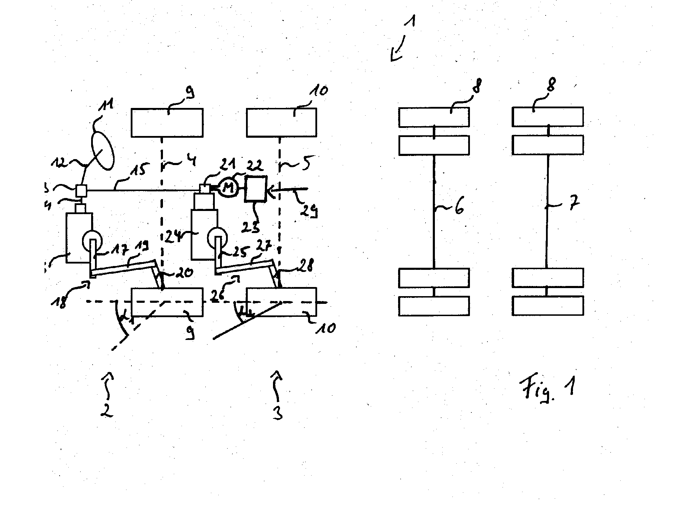

In Fig. 1 ist schematisch eine Mehrachslenkungsanlage 1 für Fahrzeuge dargestellt. Die Mehrachslenkungsanlage 1 umfasst eine erste Lenkungsanordnung 2 und eine zweite Lenkungsanordnung 3. Die erste Lenkungsanordnung 2 ist einer ersten Lenkachse 4 und die zweite Lenkungsanordnung 3 ist einer zweiten Lenkachse 5 zugeordnet. Beide Lenkachsen 4, 5 sind in Fahrzeuglängsrichtung zueinander beabstandet und benachbart zueinander angeordnet, wobei die erste Lenkachse 4 die vorderste Fahrzeugachse bildet. Mit Abstand zu den beiden Lenkachsen 4, 5 sind zwei starre Achsen 6, 7 mit jeweils vier Fahrzeugrädern 8 angeordnet. Den beiden Lenkachsen 4, 5 sind jeweils zwei Fahrzeugräder 9, 10 zugeordnet. Mithilfe der Lenkungsanordnungen 2, 3 können die Fahrzeugräder 8, 9 gelenkt, das heißt ihr Radeinschlagwinkel a1, a2 geändert werden.

An dieser Stelle sei erwähnt, dass in den Figuren die Lenkungsanordnungen 2, 3 sowie die Anbindung der Fahrzeugräder 9, 10 lediglich schematisch dargestellt sind. Aus Übersichtlichkeitsgründen ist lediglich die Anbindung der in der Zeichnungsebene unteren Fahrzeugräder 9, 10 an die Lenkungsaggregate dargestellt.

Die erste Lenkungsanordnung 2 umfasst eine als Lenkrad ausgebildete Lenkhandhabe 11, die drehfest mit einer Lenksäule 12 verbunden ist. Die Lenksäule 12 mündet in ein Winkelgetriebe 13. In Abhängigkeit von der Drehung der Lenksäule 12 wird über das Winkelgetriebe 13 eine Verbindungswelle 14 sowie eine Kopplungswelle 15 in Rotation versetzt. Die Verbindungswelle 14 bildet die Eingangswelle eines nur schematisch dargestellten Hauptlenkungsaggregates 16 der ersten Lenkungsanordnung 2. Im gezeigten Ausführungsbeispiel ist das Hauptlenkungsaggregat 16 als herkömmliches Kugelmutterhydrogetriebe ausgebildet, mit dem die Lenkbewegung der Lenksäule 2 servounterstützt wird. Mittels des Hauptlenkungsaggregats 16 wird eine nicht gezeigte Segmentwelle verdreht, welche wiederum auf einen Lenkstockhebel 17 eines ersten Lenkgestänges 18 der ersten Lenkungsanordnung 2 verstellend einwirkt. Der Lenkstockhebel 17 ist drehgelenkig mit einer ersten Schubstange 19 des ersten Lenkgestänges 18 verbunden, welche wiederum gelenkig an einen Radlenkhebel 20 angebunden ist, welcher verstellend auf das Fahrzeugrad 9 einwirkt. Bei einer Drehbewegung an der Lenkhandhabe wird demnach über das Hauptlenkungsaggregat 16 und das Lenkgestänge 18 der Radeinschlagwinkel a1 der Fahrzeugräder 9 verstellt, wobei in der Regel die Radeinschlagwinkel der beiden vorderen Fahrzeugräder 9 zur Einhaltung der Ackermanngeometrie differieren.

Während die Drehbewegung der Lenksäule 12 von der Verbindungswelle 14 zu dem Hauptlenkungsaggregat 16 der vorderen Lenkungsanordnung 2 übertragen wird, überträgt die Kopplungswelle 15 diese Drehbewegung auf die zweite Lenkungsanordnung 3. Hierdurch wird eine definierte Lenkbewegung der Fahrzeugräder 10 erzwungen. Erfindungsgemäß wird dieser erzwungenen Lenkbewegung bzw. dem daraus resultierenden Radeinschlagwinkels eine Offset-Lenkbewegung bzw. ein Offset-Radeinschlagwinkel überlagert. Durch diese Maßnahme kann Einfluss auf das Lenkverhalten der zweiten Lenkungsanordnung 3 in Abhängigkeit statischer und/oder dynamischer Größen genommen werden.

Die Kopplungswelle 15 bildet die Eingangswelle eines Winkelüberlagerungsgetriebes 21 bekannter Bauart. Das Winkelüberlagerungsgetriebe 21 wird von einem Elektromotor 22 beaufschlagt, welcher von einem Software-Steuergerät 23 in Abhängigkeit statischer oder dynamischer Größen angesteuert wird. Das Winkelüberlagerungsgetriebe 21 überlagert dem von der Kopplungswelle 15 vorgegebenen Lenkwinkel, einen Offset-Lenkwinkel. Der resultierende Winkel wird von dem Winkelüberlagerungsgetriebe 21 einem Hilfslenkungsaggregat 24 zugeführt. Dieses ist in diesem Ausführungsbeispiel ebenfalls als Kugelmutterhydrogetriebe ausgebildet und beaufschlagt hydraulisch verstärkt einen zweiten Lenkstockhebel 25 eines zweiten Lenkgestänges 26 der zweiten Lenkungsanordnung 3. Der zweite Lenkstockhebel 25 überträgt seine Schwenkbewegung über eine zweite Schubstange 27 auf einen zweiten Radlenkhebel 28, welcher das in der Zeichnungsebene untere Fahrzeugrad 10 entsprechend verstellt.

Das Software-Steuerungsgerät 23 steuert den Elektromotor 22 des Winkelüberlagerungsgetriebes 21, wie erwähnt, in Abhängigkeit statischer oder dynamischer Größen 29. Dabei werden die dynamischen Größen mittels nicht dargestellter Sensoren detektiert. Statische Größen oder ein zu überlagernder Offset-Lenkwinkel können vorgegeben werden.

In dem gezeigten Ausführungsbeispiel sind sämtliche Fahrzeugräder 8, 9, 10 in Geradeausstellung eingezeichnet. Die Fahrzeugräder 9, 10 können mithilfe der ersten und der zweiten Lenkungsanordnung 2, 3 beispielsweise derart gedreht werden, dass sich die Radeinschlagwinkel a1, a2, wie in Fig. 1 eingezeichnet, ergeben. Im gezeigten Ausführungsbeispiel ist der Radeinschlagwinkel a1 des vorderen linken Fahrzeugrades 9 größer als der Radeinschlagwinkel a2 des Fahrzeugrades 10. Die eingezeichneten möglichen Radeinschlagwinkel a1, a2 sind lediglich beispielhaft gewählt und dienen nur zur Veranschaulichung einer möglichen Wirkung des Überlagerungsmoduls. Mithilfe des Winkelüberlagerungsgetriebes 21 ist es möglich, unabhängig von der von der ersten Lenkungsanordnung 2 vorgegebenen Lenkbewegung Einfluss auf die Lenkbewegung bzw. den Radeinschlagwinkel der Fahrzeugräder 10 der zweiten Lenkungsanordnung zu nehmen.

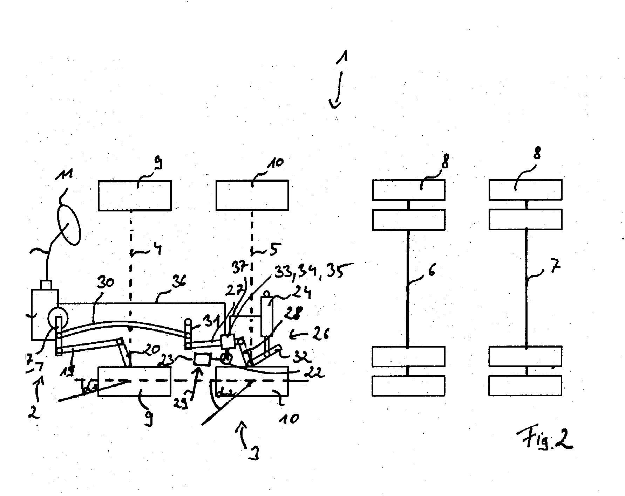

In Fig. 2 ist eine alternative Mehrachslenkungsanlage 1 dargestellt. Auch diese Mehrachslenkungsanlage 1 dient zur Lenkung der beiden vorderen Lenkachsen 4, 5. Die hinteren beiden Achsen 6, 7 sind starr ausgebildet.

Die Mehrachslenkungsanlage 1 umfasst eine erste Lenkungsanordnung 2, welche der ersten Lenkachse 4 bzw. den Fahrzeugrädern 9 zugeordnet ist und eine zweite Lenkungsanordnung 3, welche der zweiten Lenkachse 5 bzw. den Fahrzeugrädern 10 zugeordnet ist. Die erste Lenkungsanordnung 2 umfasst eine als Lenkrad ausgebildete Lenkhandhabe 11, welche drehfest mit einer Lenksäule 12 verbunden ist. Die Lenksäule 12 bildet die Eingangswelle eines Hauptlenkungsaggregates 16, welches auch in diesem Ausführungsbeispiel als Kugelmutterhydrogetriebe ausgebildet ist. Mittels des Hauptlenkungsaggregates 16 wird die Lenkbewegung der Lenkhandhabe 11 bzw. der Lenksäule 12 hydraulisch unterstützt. Die Ausgangswelle des Hauptlenkungsaggregates 16 ist mit einem Lenkstockhebel 17 gelenkig verbunden. Die Schwenkbewegung des Lenkstockhebels 17 wird von einer Schubstange 19 auf einen mit dem Fahrzeugrad 9 verbundenen Radlenkhebel 20 übertragen. Die Lenkbewegung des Fahrers wird in eine Verstellung der Fahrzeugräder 9 und einen daraus resultierenden Radeinschlagwinkel a1 umgesetzt. Im Wesentlichen parallel und in Fahrzeuglängsrichtung zu der Schubstange 19 verläuft eine Verbindungsschubstange 30, die einerseits gelenkig mit dem Lenkstockhebel 17 und andererseits gelenkig mit einem Zwischenhebel 31 verbunden ist. Der Anlenkpunkt der Verbindungsschubstange 30 an dem Lenkstockhebel 17 befindet sich zwischen dem Anlenkpunkt der Schubstange 19 an dem Lenkstockhebel 17 und dem Verbindungspunkt des Lenkstockhebels 17 mit der nicht dargestellten Ausgangswelle des Hauptlenkungsaggregates 16. Der Zwischenhebel 31 ist einerseits gelenkig mit der Fahrzeugkarosserie und andererseits gelenkig mit einer zweiten Schubstange 27 der zweiten Lenkungsanordnung 3 verbunden. Diese Schubstange 27 ist wiederum gelenkig mit einem zweiten Radlenkhebel 28 der zweiten Lenkungsanordnung 26 verbunden. Mit diesem zweiten Radlenkhebel 28 ist drehfest ein dritter Radlenkhebel 32 verbunden, der wiederum im Bereich seines freien Endes mit einem Hilfslenkungsaggregat 24 gelenkig verbunden ist. Das Hilfslenkungsaggregat 24 ist im gezeigten Ausführungsbeispiel gemäß Fig. 2 als hydraulische Kolben-Zylindereinheit ausgebildet.

Im Gegensatz zu dem Ausführungsbeispiel gemäß Fig. 1 wird bei dem Ausführungsbeispiel gemäß Fig. 2 keine rotatorische Bewegung, sondern eine translatorische Bewegung von der ersten Lenkungsanordnung 2 auf die zweite Lenkungsanordnung 3 übertragen. Die zweite Lenkungsanordnung 3 gemäß dem Ausführungsbeispiel nach Fig. 2 ist jedoch dadurch im gleichen Maße zwangsgeführt wie die zweite Lenkungsanordnung 3 gemäß dem Ausführungsbeispiel nach Fig. 1. Wird von dem Hauptlenkungsaggregat 16 der Lenkstockhebel 17 verschwenkt, so wird diese Schwenkbewegung über die Verbindungsschubstange 30 an das zweite Lenkgestänge 26 der zweiten Lenkungsanordnung 3 übertragen, wodurch die Fahrzeugräder 10 verschwenkt werden und sich ein bestimmter Radeinschlagwinkel einstellt. Um Einfluss auf die Lenkbewegung der zweiten Lenkungsanordnung 3 bzw. den Radeinschlagwinkel nehmen zu können, ist eine Baueinheit 33 vorgesehen. Diese ist an die zweite Schubstange 27 angebunden. Die Baueinheit 33 umfasst eine Längenänderungseinheit 34, in diesem Ausführungsbeispiel einen Spindeltrieb, der von einem Elektromotor 22 verstellt werden kann. Mittels der Längenänderungseinheit 34 ist somit die wirksame Länge der zweiten Schubstange 27 variierbar. Zur Ansteuerung des Elektromotors 22 ist ein Software-Steuerungsgerät 23 vorgesehen, das den Elektromotor 22 in Abhängigkeit statischer und/oder dynamischer Größen ansteuert. Somit ist es möglich, die wirksame Länge der zweiten Schubstange 27 einmalig bei der Fahrzeugkonfiguration in Abhängigkeit statischer Größen festzulegen oder dynamisch an die spezielle Fahrsituation anzupassen.

Die Baueinheit 33 umfasst weiterhin ein Hydraulikventil 35. Zwischen dem Hauptlenkungsaggregat 16 und dem Hydraulikventil 35 besteht eine Hydraulikverbindung 36, so dass das Hydraulikventil 35 mit Flüssigkeitsdruck von einer oder mehreren Hydraulikpumpen des Hauptlenkungsaggregates 16 beaufschlagt wird. Das Hydraulikventil 35 steuert die Versorgung des Hilfslenkungsaggregates 24 mit Hydraulikflüssigkeit in Abhängigkeit von der Verstellung der zweiten Schubstange 27. Hierdurch wird das Maß der Servounterstützung variiert. Zwischen Hydraulikventil 35 und Hilfslenkungsaggregat 24 besteht zu diesem Zweck eine zweite Hydraulikverbindung 37.

Mithilfe der Längenänderungseinheit 34 kann Einfluss auf den resultierenden Radeinschlagwinkel a2 der zweiten Fahrzeugräder 10 genommen werden. Wird die Schubstange verlängert, so wird der resultierende Radeinschlagwinkel a2 verringert. In dem gezeigten Ausführungsbeispiel sind zwei Radeinschlagwinkel a1 und a2 eingezeichnet. Der Radeinschlagwinkel a2 des Fahrzeugrades 10 ist dabei größer als der Radeinschlagwinkel a1 des Fahrzeugrades 9. Eine derartige Einstellung kann beim Einlenkvorgang für eine kurze Zeitspanne von Vorteil sein, um die auf die Fahrzeugräder wirkenden Seitenführungskräfte schneller aufzubauen und damit ein optimales Einlenkverhalten zu gewährleisten.

Bezugszeichenliste
- 1.: Mehrachslenkungsanlage
- 2.: erste Lenkungsanordnung
- 3.: zweite Lenkungsanordnung
- 4.: erste Lenkachse
- 5.: zweite Lenkachse
- 6.: starre Achse
- 7.: starre Achse
- 8.: Fahrzeugräder
- 9.: Fahrzeugräder
- 10.: Fahrzeugräder
- 11.: Lenkhandhabe
- 12.: Lenksäule
- 13.: Winkelgetriebe
- 14.: Verbindungswelle
- 15.: Kopplungswelle
- 16.: Hauptlenkungsaggregat
- 17.: Lenkstockhebel
- 18.: erstes Lenkgestänge
- 19.: erste Schubstange
- 20.: Radlenkhebel
- 21.: Winkelübertragungsgetriebe
- 22.: Elektromotor
- 23.: Software-Steuergerät
- 24.: Hilfslenkungsaggregat
- 25.: zweiter Lenkstockhebel
- 26.: zweites Lenkgestänge
- 27.: zweite Schubstange
- 28.: zweiter Radlenkhebel
- 29.: Einflussgrößen
- 30.: Verbindungsschubstange
- 31.: Zwischenhebel
- 32.: Radlenkhebel
- 33.: Baueinheit
- 34.: Längenänderungseinheit
- 35.: Hydraulikverbindung
- 36.: Hydraulikventil
- 37.: zweite Hydraulikverbindung

## Patentansprüche

1. Mehrachslenkungsanlage für Fahrzeuge mit einer ersten und mindestens einer zweiten Lenkachse (4, 5), die in Fahrzeuglängsrichtung voneinander beabstandet sind, wobei der ersten Lenkachse (4) eine erste Lenkungsanordnung (2) mit einem Hauptlenkungsaggregat (16), einem ersten Lenkgestänge (18) sowie einer Lenkhandhabe (11) und der zweiten Lenkachse (5) eine zweite Lenkungsanordnung (3) mit einem Hilfslenkungsaggregat (24) und einem zweiten Lenkgestänge (26) zugeordnet ist, und wobei die beiden Lenkungsanordnungen (2, 3) mit einer mechanischen und/oder hydraulischen Lenkkraftübertragungseinrichtung (15, 30) miteinander gekoppelt sind, derart, dass eine Lenkbewegung an der Lenkhandhabe (11) sowohl in eine Lenkbewegung der ersten als auch der zweiten Lenkachse (4, 5) umgesetzt wird,
**dadurch gekennzeichnet,**
**dass** ein Überlagerungsmodul (21, 34) vorgesehen ist, mittels dem der der zweiten Lenkungsanordnung (3) von der ersten Lenkungsanordnung (2) über die Lenkkraftübertragungseinrichtung (15, 30) vorgegebenen Lenkbewegung eine Offset-Lenkbewegung überlagerbar ist.

2. Mehrachslenkungsanlage nach Anspruch 1,
**dadurch gekennzeichnet,**
**dass** das Überlagerungsmodul (21, 34) einen Aktuator (22) umfasst, der von einem Steuerungsgerät (23), insbesondere einem Software-Steuerungsgerät, ansteuerbar ist.

3. Mehrachslenkungsanlage nach Anspruch 2,
**dadurch gekennzeichnet,**
**dass** das Steuerungsgerät den Aktuator (22) in Abhängigkeit von mindestens einer statischen Größe, insbesondere des Radstandes und/oder des Lenkwinkels, und/oder in Abhängigkeit mindestens einer dynamischen Größe, insbesondere der Lenkgeschwindigkeit und/oder der Fahrzeuggeschwindigkeit, ansteuernd ausgebildet ist.

4. Mehrachslenkungsanlage nach Anspruch 2,
**dadurch gekennzeichnet,**
**dass** der Aktuator (22) als Elektromotor ausgebildet ist.

5. Mehrachslenkungsanlage nach einem der vorhergehenden Ansprüche,
**dadurch gekennzeichnet,**
**dass** die erste Lenkungsanordnung (2) und die zweite Lenkungsanordnung (3) mechanisch mittels einer Kopplungswelle (15) miteinander gekoppelt sind, und
**dass** das Überlagerungsmodul als Winkelüberlagerungsgetriebe (21) ausgebildet ist, mit dem dem von der Kopplungswelle (15) übertragenen Lenkwinkel ein Offset-Lenkwinkel überlagerbar ist.

6. Mehrachslenkungsanlage nach einem der vorhergehenden Ansprüche,
**dadurch gekennzeichnet,**
**dass** das Winkelüberlagerungsgetriebe (21) eine Eingangswelle und eine Ausgangswelle umfasst, und dass die Eingangswelle von der Kopplungswelle (15) gebildet ist, und dass die Ausgangswelle des Winkelüberlagerungsgetriebes eine Eingangswelle des Hilfslenkungsaggregates (24) bildet.

7. Mehrachslenkungsanlage nach einem der vorhergehenden Ansprüche,**dadurch gekennzeichnet,**
**dass** das Hauptlenkungsaggregat (16) und/oder das Hilfslenkungsaggregat (24) als Kugelmutterhydrogetriebe ausgebildet sind.

8. Mehrachslenkungsanlage nach einem der Ansprüche 1 bis 4,
**dadurch gekennzeichnet,**
**dass** das Überlagerungsmodul als Längenänderungseinheit (34) ausgebildet ist, mit der die wirksame Länge einer Stange (27) des Lenkgestänges des zweiten Lenkgestänges (26) veränderbar ist.

9. Mehrachslenkungsanlage nach Anspruch 8,
**dadurch gekennzeichnet,**
**dass** die erste Lenkungsanordnung (2) und die zweite Lenkungsanordnung (3) mechanisch mittels mindestens einer Verbindungsschubstange (30) miteinander gekoppelt sind.

10. Mehrachslenkungsanlage nach einem der Ansprüche 8 oder 9,
**dadurch gekennzeichnet,**
**dass** mittels der Längenänderungseinheit (34) die wirksame Länge einer zweiten Schubstange (27) der zweiten Lenkungsanordnung veränderbar ist.

11. Mehrachslenkungsanlage nach Anspruch 10,
**dadurch gekennzeichnet**,
die Verbindungsschubstange (30) einerseits gelenkig mit einem Lenkstockhebel (17) des ersten Lenkgestänges (18) und andererseits gelenkig mit einem Zwischenhebel (31) des zweiten Lenkgestänges (26) verbunden ist.

12. Mehrachslenkungsanlage nach Anspruch 11,
**dadurch gekennzeichnet,**
**dass** die zweite Schubstange (27) der des zweiten Lenkgestänges einerseits gelenkig mit dem Zwischenhebel (31) und andererseits mit einem zweiten Radlenkhebel (28) des zweiten Lenkgestänges (26) verbunden ist.

13. Mehrachslenkungsanlage nach einem der Ansprüche 8 bis 12,
**dadurch gekennzeichnet,**
**dass** die Längenänderungseinheit (34) als, vorzugsweise elektromotorisch angetriebener, Spindeltrieb ausgebildet ist.

14. Mehrachslenkungsanlage nach einem der vorhergehenden Ansprüche,
**dadurch gekennzeichnet,**
**dass** das Hilfslenkungsaggregat (24) als Kolben-Zylindereinheit ausgebildet ist.

15. Mehrachslenkungsanlage nach einem der vorhergehenden Ansprüche,
**dadurch gekennzeichnet,**
**dass** die erste Lenkungsachse (4) die vorderste Fahrzeugachse und die zweite Lenkachse (5) die zur vorderen Fahrzeugachse unmittelbar benachbarte Fahrzeugachse ist.

16. Verfahren zur Steuerung einer Mehrachslenkungsanlage (1) eines Fahrzeugs, insbesondere nach einem der vorhergehenden Ansprüche, mit einer einer ersten Lenkachse (4) zugeordneten ersten Lenkungsanordnung (2) sowie einer einer zweite Lenkachse (5) zugeordneten zweiten Lenkungsanordnung (3), wobei der zweiten Lenkungsanordnung (3) von der ersten Lenkungsanordnung (2) eine Lenkbewegung aufgezwungen wird,
**dadurch gekennzeichnet,**
**dass** der aufgezwungenen Lenkbewegung eine Offset-Lenkbewegung überlagert wird.

17. Verfahren nach Anspruch 16,
**dadurch gekennzeichnet,**
**dass** die Offset-Lenkungsbewegung von einem Steuerungsgerät (16), insbesondere einem Software-Steuerungsgerät, vorgegeben werden.

18. Verfahren nach einem der Ansprüche 16 oder 17,
**dadurch gekennzeichnet,**
**dass** die Offset-Lenkbewegung in Abhängigkeit von mindestens einer statischen Größe, insbesondere des Radstandes, und/oder in Abhängigkeit mindestens einer dynamischen Größe, insbesondere der Lenkgeschwindigkeit und/oder der Fahrzeuggeschwindigkeit, ermittelt wird.

19. Verfahren nach einem der Ansprüche 16 bis 18,
**dadurch gekennzeichnet,**
**dass** einem von der ersten Lenkungsanordnung (2) an die zweite Lenkungsanordnung (3) übertragenen Lenkwinkel ein Offset-Lenkwinkel überlagert wird.

20. Verfahren nach einem der Ansprüche 16 bis 19,
**dadurch gekennzeichnet,**
**dass** einer von der ersten Lenkungsanordnung (2) vorgegeben translatorischen Bewegung eine translatorische Offset-Bewegung überlagert wird.

21. Verfahren nach einem der Ansprüche 16 bis 20,
**dadurch gekennzeichnet,**
**dass** die wirksame Länge einer Stange (27), vorzugsweise einer Schubstange, des Lenkgestänges (26) der zweiten Lenkungsanordnung (3) verstellt wird.
